Europäisches Patentamt

(19) European Patent Office

Office européen des brevets

(11) Numéro de publication : **0 184 780**
**B1**

(12) **FASCICULE DE BREVET EUROPÉEN**

(45) Date de publication du fascicule du brevet :
**22.02.89**

(21) Numéro de dépôt : **85115493.0**

(22) Date de dépôt : **05.12.85**

(51) Int. Cl.⁴ : **B 60 G 13/00**, F 16 F   9/54

(54) **Dispositif de fixation de la tige d'un amortisseur.**

(30) Priorité : **06.12.84 FR 8418650**

(43) Date de publication de la demande :
**18.06.86 Bulletin 86/25**

(45) Mention de la délivrance du brevet :
**22.02.89 Bulletin 89/08**

(84) Etats contractants désignés :
**DE FR GB IT**

(56) Documents cités :
**EP--A-- 0 003 290**
**DE--U-- 1 936 353**
**DE--U-- 8 110 562**
**DE--U-- 8 127 163**
**FR--A-- 1 149 962**
**FR--A-- 2 287 627**
**US--A-- 4 046 480**

(73) Titulaire : **Sirven, Jacques**
**34, rue de l'Orangerie**
**F-78000 Versailles (FR)**

(72) Inventeur : **Sirven, Jacques**
**34, rue de l'Orangerie**
**F-78000 Versailles (FR)**

(74) Mandataire : **Casalonga, Axel et al**
**BUREAU D.A. CASALONGA OFFICE JOSSE & PETIT**
**Morassistrasse 8**
**D-8000 München 5 (DE)**

## Description

La présente invention a pour objet un dispositif permettant la fixation de la tige d'un amortisseur de véhicule automobile sur l'axe d'un organe de la suspension du véhicule et en particulier sur un axe solidaire d'un bras de suspension.

La tige des amortisseurs de véhicule automobile est habituellement fixée sur un axe d'un bras de suspension par l'intermédiaire d'un manchon élastique qui permet de corriger certains défauts d'alignement, de rattraper un jeu éventuel et qui offre en outre une certaine élasticité qui vient s'ajouter à l'effet d'amortissement des oscillations de la suspension.

Pour certains types d'amortisseur il convient cependant de remplacer une telle fixation élastique de la tige par une fixation rigide. Il en est ainsi notamment dans des amortisseurs qui comportent une valve de commande interne permettant de modifier la force d'amortissement en fonction de la vitesse du déplacement de la tige en compression. On comprend en effet qu'il est alors important, pour le fonctionnement convenable de l'amortisseur, d'éviter tout effet de filtrage et de transmettre directement tout mouvement de la suspension à la tige de façon à agir immédiatement sur la valve de commande interne.

A titre d'exemple d'amortisseur de ce type, on pourra citer la demande de brevet français 2 287 627 ou la demande de brevet européen 000 32 90. Dans les deux cas, l'ouverture d'une valve de commande interne en cas de mouvement de compression rapide de la tige entraîne une diminution de la force d'amortissement. La fixation de la tige de tels amortisseurs doit donc se faire de manière rigide.

L'utilisation d'une liaison par rotule qui pourrait être envisagée est cependant une solution onéreuse qu'il est préférable de pòuvoir éviter.

Par ailleurs, une fixation rigide présente l'inconvénient de ne pas permettre une correction d'éventuels défauts d'alignement ni un rattrapage de jeu.

La présente invention a donc pour objet un dispositif de fixation de la tige d'un amortisseur qui permette un faible débattement de chaque côté d'un plan perpendiculaire à l'axe du bras de suspension sur lequel est fixé l'amortisseur afin de compenser les défauts d'alignement et qui autorise en outre un rattrapage de jeu tout en présentant une grande rigidité selon la direction de la tige de l'amortisseur.

L'invention a également pour objet un tel dispositif de fixation qui permette un débattement angulaire important autour de l'axe du bras de suspension.

Selon l'invention le dispositif de fixation de la tige d'un amortisseur pour véhicule automobile sur un axe d'un bras de suspension de véhicule, comprend un élément de montage capable de fléchir de chaque côté d'un plan perpendiculaire à l'axe précité et fixé rigidement à l'extrémité de la tige et un élément élastique prenant appui sur l'élément de montage et exerçant sur l'axe précité un effort de précontrainte orienté suivant la direction axiale de la tige et d'une valeur supérieure à l'effort maximal transmis par la tige lors du fonctionnement de l'amortisseur.

L'élément de montage doit avoir une flexibilité convenable. Sa forme est dictée également par des considérations d'encombrement. On peut envisager d'utiliser à titre d'élément de montage un étrier, un cadre ou une simple lame flexible dans son plan selon la direction de l'axe.

L'élément élastique peut être disposé de façon à exercer un effort de précontrainte en compression ou en traction.

Une bague antifriction est de préférence montée autour de l'axe sur une majeure partie de sa périphérie. Une telle bague peut être réalisée sous la forme de deux demi-coquilles ou être constituée par un élément annulaire fendu l'élément élastique exerce alors son effort de précontrainte sur une portion de la bague antifriction se trouvant sensiblement dans le prolongement de la tige.

Selon une variante de l'invention, l'élément élastique est constitué par une lame-ressort venant agir sur l'axe de la suspension par l'intermédiaire d'une élément rigide en forme de cale. L'élément de montage peut affecter la forme d'une lame flexible disposée en étrier fixée rigidement à l'extrémité de la tige. La flexibilité de cet étrier dans son plan permet alors d'obtenir un faible débattement angulaire de chaque côté d'un plan perpendiculaire à l'axe de la suspension de façon à compenser d'éventuels défauts d'alignement lors du montage de l'amortisseur. Un élément d'appui pour la lame-ressort est fixé rigidement à l'extrémité des branches de l'étrier.

Selon une deuxième variante, l'élément élastique est constitué par un bloc en élastomère ou en une matière analogue présentant des caractéristiques d'élasticité convenables. Ce bloc élastique est maintenu serré entre l'axe de la suspension et un étrier de serrage fixé rigidement à l'élément de montage. Le bloc élastique peut être disposé entre l'axe de la suspension et la tige de l'amortisseur auquel cas il exerce une précontrainte de compression. Il peut également être disposé en position diamétralement opposée auquel cas il exerce une précontrainte de traction.

Dans tous les cas, l'utilisation d'une précontrainte de valeur supérieure à la forme maximale transmise par la tige, permet d'obtenir la rigidité recherchée pour la fixation évitant ainsi toute perturbation dans le fonctionnement de l'amortisseur lorsque ce fonctionnement dépend d'une transmission précise des mouvements de la tige liée à la suspension.

L'invention sera mieux comprise à l'étude de la description détaillée de quelques modes de réalisation illustrés à titre d'exemples nullement limitatifs et illustrés par les dessins annexés sur lesquels :

la figure 1 montre schématiquement une vue en élévation d'un mode de réalisation d'un dispositif de fixation selon l'invention, seule la partie basse du corps de l'amortisseur ayant été représentée ;

la figure 2 est une vue de côté du dispositif de la figure 1 ;

la figure 3 est une vue analogue à la figure 1 d'une variante d'un dispositif de fixation selon l'invention utilisant un élément élastique en élastomère exerçant une précontrainte en traction ;

la figure 4 est une vue de côté du dispositif de la figure 3, et

la figure 5 est une vue analogue à la figure 3 illustrant une variante dans laquelle l'élément élastique en élastomère est monté de façon à exercer une précontrainte en compression.

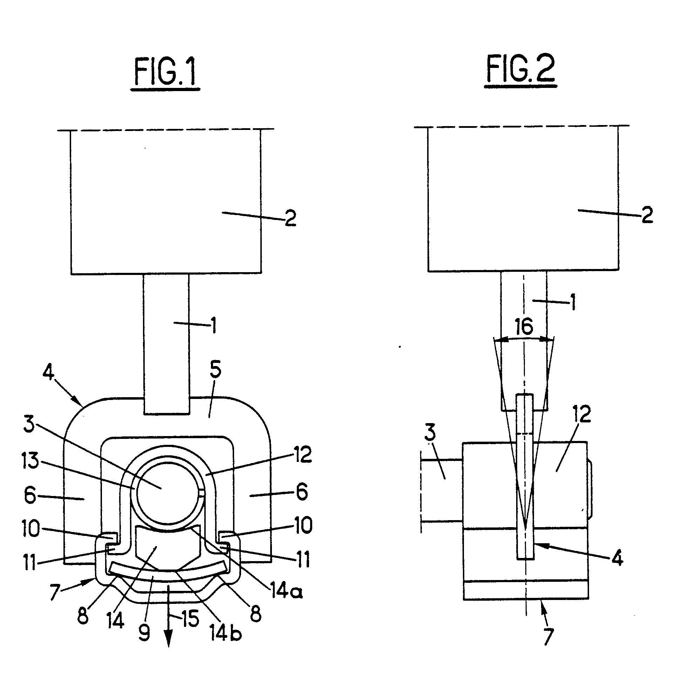

Tel qu'il est illustré sur les figures 1 et 2, le dispositif de l'invention, permet la fixation de la tige 1, d'un amortisseur 2 sur un axe 3 faisant partie d'une suspension de véhicule automobile non représentée sur la figure.

Le dispositif de l'invention comprend une lame 4 en forme d'étrier flexible dans son plan. La branche centrale 5 est fixée rigidement, par exemple par soudure, à l'extrémité de la tige 1. Les deux branches latérales 6 de l'étrier 4 sont parallèles à la tige 1 et servent de support au voisinage de leur extrémité libre à un élément d'appui 7 fixé par soudure sur lesdites branches 6.

L'élément d'appui comporte des rebords 8 sur lesquels vient en appui une lame-ressort 9 dont la flèche a été largement exagérée sur la figure 1 pour mieux faire comprendre sa fonction. L'élément d'appui 7 comporte également des rebords supérieurs 10 qui servent de retenue pour les extrémités recourbées 11 d'un étrier de serrage 12 qui vient entourer l'axe 3.

Une bague antifriction 13, réalisée dans l'exemple illustré sous la forme d'un anneau fendu en un matériau présentant des caractéristiques de faible frottement, est placée autour de l'axe 3 entre ce dernier et l'étrier de serrage 12. Un élément intercalaire 14 en forme de cale est placé entre la lame-ressort 9 et la bague 13 de façon à transmettre l'effort de précontrainte du ressort 9 à l'axe 3 par l'intermédiaire de la bague antifriction 13. La cale 14 présente avantageusement une surface supérieure incurvée 14a pour mieux s'adapter à la forme de la périphérie externe de la bague 13. Une portion plane inférieure 14b est en outre prévue sur la cale 14 pour améliorer la surface de contact avec la lame-ressort 9.

Ainsi constitué, le dispositif de fixation fonctionne de la manière suivante : l'arbre 3 de la suspension équipé de la bague antifriction 13 se trouve serré entre l'étrier 12 et l'élément d'appui 7 avec interposition de la lame-ressort 9 qui exerce une précontrainte dirigée dans le sens de la flèche 15 c'est-à-dire dans le sens correspondant à la traction sur la tige 1 de l'amortisseur 2. La précontrainte exercée par le ressort 9 est choisie de façon à être toujours supérieure à l'effort maximal exercé sur la tige 1 lors du fonctionnement de l'amortisseur. De cette manière, la fixation de la tige 1 de l'amortisseur sur l'axe 3, est réalisée de manière parfaitement rigide dans la direction de la tige 1. L'existence de la lame-ressort 9 permet cependant le rattrapage de jeux éventuels par exemple à la suite de l'usure normale du fonctionnement de l'ensemble. L'élasticité dans son plan de la lame flexible en forme d'étrier 4 permet à celle-ci de fléchir selon la direction de l'axe 3 en autorisant un léger débattement de chaque côté d'un plan sensiblement perpendiculaire à l'axe 3 permettant ainsi de corriger d'éventuels défauts d'alignement au montage. Le débattement est figuré de manière schématique et largement exagéré sur la figure 2 par la flèche 16. Enfin il y a lieu de noter que la fixation permet au contraire un large débattement angulaire autour de l'axe 3 grâce à l'existence de la bague antifriction 13.

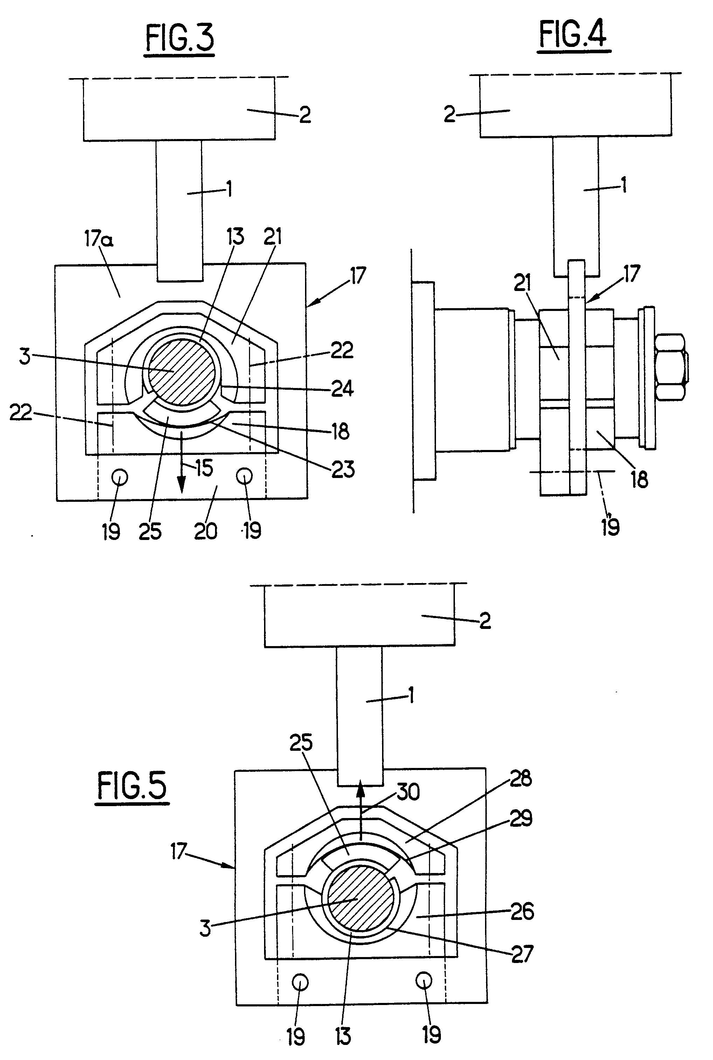

Dans la variante de la figure 3 où les pièces identiques portent les mêmes références, l'élément de montage est constitué par un cadre souple 17 dont l'une des branches 17a est fixée par soudure à l'extrémité de la tige 1.

Un élément d'appui inférieur 18 est fixé par des vis 19 sur la branche 20 du cadre 17 opposée à la branche 17a par laquelle la tige 1 se trouve fixée.

L'étrier de serrage 21 est monté sur l'élément d'appui par l'intermédiaire de vis 22. L'élément d'appui 18 comme l'étrier de serrage 21 comporte des portées internes semi-cylindriques 23, 24. La bague antifriction 13, qui peut être réalisée comme dans la variante précédente sous la forme d'un anneau fendu ou encore en deux demi-coquilles, est montée autour de l'arbre 3 et se trouve serrée sur l'arbre 3 par la portée 24 en contact avec environ la moitié de la périphérie. Un bloc élastique réalisé ici en un matériau élastomère 25 est monté entre la portion de la bague 13 se trouvant par rapport à l'axe 3 du côté opposé à la tige 1 et la portée 23 de l'élément d'appui 18. Le bloc élastomère 25 présente une forme semi-cylindrique dont la courbure est adaptée sensiblement à celle de la bague antifriction 13. La portée 23 présente une courbure plus importante.

Le serrage des vis 22 assure un écrasement partiel du bloc élastomère 25 qui exerce dans ces conditions une précontrainte en traction dans le sens de la flèche 15 comme c'était le cas dans la variante de la figure 1.

Le dispositif de fixation fonctionne de la même manière. Comme précédemment le bloc élastomère est choisi de façon à exercer une contrainte supérieure à l'effort maximal transmis sur la tige 1 de façon à obtenir une fixation rigide dans la direction de la tige 1. La souplesse du cadre 17 permet d'autoriser de légers débattements absorbant d'éventuels défauts d'alignement.

Dans la variante de la figure 5 qui porte les mêmes références pour les pièces identiques à la variante de la figure 3, l'élément d'appui 26 fixé par les vis 19 au cadre 17 présente une hauteur plus importante de façon que sa portée cylindrique 27 dont la courbure correspond à celle de la bague antifriction 13 vienne entourer cette dernière pratiquement sur la moitié de sa périphérie. L'étrier de serrage 28 est au contraire de dimensions inférieures à l'étrier de serrage 21 de la variante de la figure 3. Sa portée cylindrique interne 29 présente une courbure plus importante que celle de la bague 13. Le bloc élastique 25 est placé par rapport à l'axe, du même côté que la tige 1.

Dans ces conditions la précontrainte exercée est dirigée dans le sens de la flèche 30 c'est-à-dire dans le sens correspondant à une compression de la tige 1.

A part cette différence le fonctionnement de cette variante est identique à celui de la variante de la figure 3.

## Revendications

1. Dispositif de fixation de la tige (1) d'un amortisseur pour véhicule automobile sur l'axe (3) d'un organe de la suspension du véhicule, caractérisé par le fait qu'il comprend un élément de montage capable de fléchir de chaque côté d'un plan perpendiculaire à l'axe (3) de l'organe de la suspension et fixé rigidement à l'extrémité de la tige (1) et un élément élastique (9, 25) prenant appui sur l'élément de montage et exerçant sur l'axe de l'organe de la suspension un effort de précontrainte orienté selon la direction axiale de la tige et d'une valeur supérieure à l'effort maximal transmis par la tige.

2. Dispositif de fixation selon la revendication 1, caractérisé par le fait que l'élément élastique est disposé de façon à exercer un effort de précontrainte dans le sens d'une compression de la tige (1).

3. Dispositif de fixation selon la revendication 1, caractérisé par le fait que l'élément élastique est disposé de façon à exercer un effort de précontrainte dans le sens d'une traction de la tige (1).

4. Dispositif de fixation selon l'une quelconque des revendications précédentes, caractérisé par le fait qu'il comprend en outre une bague antifriction (13) entourant l'axe de la suspension sur une majeure partie de sa périphérie, l'élément élastique exerçant son effort de précontrainte sur une portion de la bague antifriction (13) se trouvant sensiblement dans le prolongement de la tige (1).

5. Dispositif de fixation selon l'une quelconque des revendications précédentes, caractérisé par le fait que l'élément élastique est constitué par une lame-ressort (9) agissant sur l'axe de la suspension par l'intermédiaire d'une cale rigide (14).

6. Dispositif de fixation selon la revendication 5, caractérisé par le fait que l'élément de montage comprend une lame flexible en forme d'étrier (4) fixée rigidement à l'extrémité de la tige (1), un élément d'appui (7) pour la lame-ressort (9) étant fixé rigidement à l'extrémité des branches (6) de l'étrier (4).

7. Dispositif de fixation selon la revendication 6, caractérisé par le fait qu'un étrier de serrage (12) vient entourer l'axe (3) de la suspension et est retenu par des rebords (10) de l'élément d'appui (7).

8. Dispositif de fixation selon l'une quelconque des revendications 1 à 4, caractérisé par le fait que l'élément élastique est constitué par un bloc élastomère (25) maintenu serré entre l'axe de la suspension et un étrier de serrage (21, 28) fixé rigidement à l'élément de montage (17).

## Claims

1. Device for fixing the rod (1) of a motor vehicle shock absorber on the axle (3) of a vehicle suspension element, characterised in that it comprises a mounting element capable of bending on each side of a plane perpendicular to the axle (3) of the suspension element and fixed rigidly at the end of the rod (1) and a resilient element (9, 25) supported on the mounting element and exerting on the axle of the suspension element a prestress force directed in the axial direction of the rod and of a value greater than the maximum force transmitted by the rod.

2. Fixing device according to claim 1, characterised in that the resilient element is disposed so as to exert a prestress force in the direction of compression of the rod (1).

3. Fixing device according to claim 1, characterised in that the resilient element is disposed so as to exert a prestress force in the direction of tension of the rod (1).

4. Fixing device according to any one of the preceding claims, characterised in that it also comprises an anti-friction ring (13) surrounding the axle of the suspension over the greater part of its periphery, the resilient element exerting its prestress force over a portion of the antifriction ring (13) located substantially in the line of the rod (1).

5. Fixing device according to any one of the preceding claims, characterised in that the resilient element is constituted by a leaf spring (9) acting on the axle of the suspension by means of a rigid shim (14).

6. Fixing device according to claim 5, characterised in that the mounting element comprises a flexible plate in the shape of a yoke (4) fixed rigidly at the end of the rod (1), a support element (7) for the leaf spring (9) being fixed rigidly at the end of the branches of the yoke (4).

7. Fixing device according to claim 6, characterised in that a binding yoke (12) surrounds the axle (3) of the suspension and is retained by edges (10) of the support element (7).

8. Fixing device according to any one of claims 1 to 4, characterised in that the resilient element is constituted by an elastomeric block (25) held gripped between the axle of the suspension and a binding yoke (21, 28) fixed rigidly to the mounting element (17).

## Patentansprüche

1. Vorrichtung zur Befestigung der Stange (1) eines Kraftfahrzeug-Schwingungsdämpfers an der Achse (3) eines Organs der Fahrzeugaufhängungs, gekennzeichnet durch ein Montageelement, das in einer senkrecht zur Achse (3) des Organs der Aufhängung verlaufenden Ebene nach jeder Seite auslenkbar ist und starr an dem Ende der Stange (1) befestigt ist, und ein elastisches Element (9, 25), das sich an dem Montageelement abstützt und auf die Achse des Organs der Aufhängung eine in Achsenrichtung der Stange gerichtete Vorspannungskraft ausübt, die größer ist als die größte von der Stange übertragene Kraft.

2. Befestigungsvorrichtung nach Anspruch 1, dadurch gekennzeichnet, daß das elastische Element so angeordnet ist, daß es eine im Sinne einer Kompression der Stange (1) wirkende Vorspannungskraft ausübt.

3. Befestigungsvorrichtung nach Anspruch 1, dadurch gekennzeichnet, daß das elastische Element so angeordnet ist, daß es eine im Sinne einer Zugbeanspruchung der Stange (1) wirkende Vorspannungskraft ausübt.

4. Befestigungsvorrichtung nach einem der vorhergehenden Ansprüche, dadurch gekennzeichnet, daß ferner ein Antifriktionring (13) vorgesehen ist, der die Achse der Aufhängung über einen größeren Teil ihrer Peripherie umschließt, und aß das elastische Element seine Vorspannungskraft auf einen Teil des Antifriktionring (13) ausübt, der sich im wesentlichen in der Verlängerung der Stange (1) befindet.

5. Befestigungsvorrichtung nach einem der vorhergehenden Ansprüche, dadurch gekennzeichnet, daß das elastische Element aus einem Federblatt (9) besteht, das über einen starren Keil (14) auf die Achse der Aufhängung einwirkt.

6. Befestigungsvorrichtung nach Anspruch 5, dadurch gekennzeichnet, daß das Montageelement eine an dem Ende der Stange (1) starr befestigte flexible Platte in Form eines Bügels (4) sowie ein an den Enden der Schenkel (6) dieses Bügels starr befestigtes Stützelement (7) für das Federblatt (9) umfaßt.

7. Befestigungsvorrichtung nach Anspruch 6, dadurch gekennzeichnet, daß die Achse (3) der Aufhängung von einem Spannbügel (17) umgeben ist, der von Randflanschen (10) des Stützelements (7) gehalten ist.

8. Befestigungsvorrichtung nach einem der Ansprüche 1 bis 4, dadurch gekennzeichnet, daß das elastische Element aus einem Block (25) aus elastomerem Werkstoff besteht, der zwischen der Achse der Aufhängung und einem an dem Montageelement (17) starr befestigten Spannbügel (21, 28) eingespannt ist.

# FIG.1

# FIG.2

# FIG.3

# FIG.4

# FIG.5